# EUROPEAN PATENT APPLICATION

(11) **EP 4 546 593 A1**
(43) Date of publication of application: **30.04.2025**
(21) Application number: 24192511.4
(22) Date of filing: 02.08.2024
(51) Int. Cl.: H02J 1/10, H02J 7/34

(54) **POWER SOURCE ASSEMBLY FOR AN AERONAUTICAL VEHICLE**

(30) Priority: 13.09.2023 US 202318466430
(71) Applicant: General Electric Deutschland Holding GmbH, 60313 Frankfurt (DE); GE Marmara Technology Center Muhendislik Hizmetleri Ltd, 41471 Gebze Kocaeli (TR)
(72) Inventor: SPAGNOLO, Cosimo, 85748 Garching (DE); CENGELCI, Ekrem, 41471 Gebze (TR); OSAMA, Mohamed, 85748 Garching (DE)
(74) Representative: Openshaw & Co.

(57) **Abstract**

A power source assembly (200, 400, 450, 500) for an aeronautical vehicle (100), the power source assembly (200, 400, 450, 500) including: a fuel cell module (202, 202', 402, 402', 502) configured to provide a first direct current power output; a battery module (204, 404, 404', 504) configured to provide a second direct current power output; a direct current electric bus configured to provide a net direct current power output to a load (220, 420, 520); a DC/DC converter in electrical connection with the direct current electric bus, the DC/DC converter configured to receive the first direct current power output from the fuel cell module (202, 202', 402, 402', 502) or the second direct current power output from the battery module (204, 404, 404', 504); and a controller (212, 215, 412, 412', 512, 600) operably coupled to the DC/DC converter and configured to receive data indicative of the first direct current power output, the controller (212, 215, 412, 412', 512, 600) configured to control the DC/DC converter based on the data indicative of the first direct current power output to maintain a slew rate from the fuel cell module (202, 202', 402, 402', 502) within a slew rate range for the fuel cell module (202, 202', 402, 402', 502).

## Description

### FIELD

The present disclosure relates to a power source assembly for an aeronautical vehicle.

### BACKGROUND

Aeronautical vehicles use a variety of power sources to drive one or more propulsors that may generate thrust for the vehicles. Many vehicles use gas turbine engines, having a turbomachine and a rotor assembly. While gas turbine engines have advanced significantly over the years, it may be beneficial to examine inclusion of other power sources as a primary or secondary source of power for the vehicle. However, in the process of developing new power sources, it may be important to make sure the new technologies to not create other inefficiencies in the form of excess weight, or the like.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is schematic, perspective view of an aeronautical vehicle in accordance with an aspect of the present disclosure.
FIG. 2 is a schematic, perspective view of a gas turbine engine in accordance with an aspect of the present disclosure.
FIG. 3 is a schematic, perspective view of an electric propulsor in accordance with an aspect of the present disclosure.
FIG. 4 is a schematic view of a fuel cell module in accordance with an exemplary aspect of the present disclosure.
FIG. 5 is a schematic diagram of a power source assembly for an aeronautical vehicle in accordance with an exemplary aspect of the present disclosure.
FIG. 6 is a schematic diagram of a power source assembly for an aeronautical vehicle in accordance with another exemplary aspect of the present disclosure.
FIG. 7 is a graph depicting a split of a net output power of a power source assembly in accordance with an exemplary aspect of the present disclosure.
FIG. 8 is a schematic diagram of a power source assembly for an aeronautical vehicle in accordance with another exemplary aspect of the present disclosure.
FIG. 9 is a schematic diagram of a power source assembly for an aeronautical vehicle in accordance with yet another exemplary aspect of the present disclosure.
FIG. 10 is a schematic diagram of a power source assembly for an aeronautical vehicle in accordance with still another exemplary aspect of the present disclosure.
FIG. 11 is schematic view of a controller in accordance with an exemplary aspect of the present disclosure.
FIG. 12 is a flow diagram of a method for controlling a power source assembly of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The phrases "from X to Y" and "between X and Y" each refers to a range of values inclusive of the endpoints (i.e., refers to a range of values that includes both X and Y).

As used herein, the term "maximum power draw" refers to the maximum amount of electric power required for a particular component during all anticipated non-failure mode and non-emergency mode operations for the particular component.

The present disclosure is generally related to a power source assembly for an aeronautical vehicle. The power source assembly may be configured to drive a load, such as an electric propulsor of the aeronautical vehicle. The power source assembly may generally include a fuel cell module configured to provide a first direct current (DC) power output, a battery module configured to provide a second direct current power output, a DC/DC converter configured to receive the first direct current power output from the fuel cell module or the second direct current power output from the battery module, and a controller. The controller may be operatively coupled to the DC/DC converter and configured to receive data indicative of the first direct current power output. The controller may further be configured to control the DC/DC converter based on the data indicative of the first direct current power output to maintain a slew rate from the fuel cell module within a slew rate range for the fuel cell module.

In such a manner, it will be appreciated that the DC/DC converter may ensure that the power output of the fuel cell module is not varied too quickly in response to a change in a power output demand on the power source assembly. For example, it will be appreciated that rapid changes in the amount of power drawn from a fuel cell module during flight operations can have negative effects on the life and reliability of a fuel cell module. For example, if a Proton Exchange Membrane Fuel Cell (PEMFC) is subjected to rapid load changes, certain catalysts may be dissolved, and/or a low reactant condition may happen. A battery module may be provided having a power rating comparable to that of the fuel cell module to support the fuel cell module during sudden load demands. The power output assembly topologies and control methodologies of the present disclosure allow for much a battery module having a much smaller power rating without compromising a life of the fuel cell module.

For example, in response to a request to increase a net power output of the power source assembly, the controller may initiate a ramp-up of the first direct current power output of the fuel cell module at a rate within the slew rate range for the fuel cell module. In order to ensure the net power output of the power source assembly is sufficient to meet the power output demand on the power source assembly, the battery module may substantially instantaneously provide the difference between the current first direct current power output and the power output demand. A second DC/DC converter may be provided to provide such functionality. As the first direct current power output of the fuel cell module ramps up and reaches the power output demand, the second direct current power output of the battery module correspondingly decreases. Such a configuration may allow for a much smaller capacity battery module, allowing for an overall lighter system while still providing a tightly regulated DC bus voltage for the load.

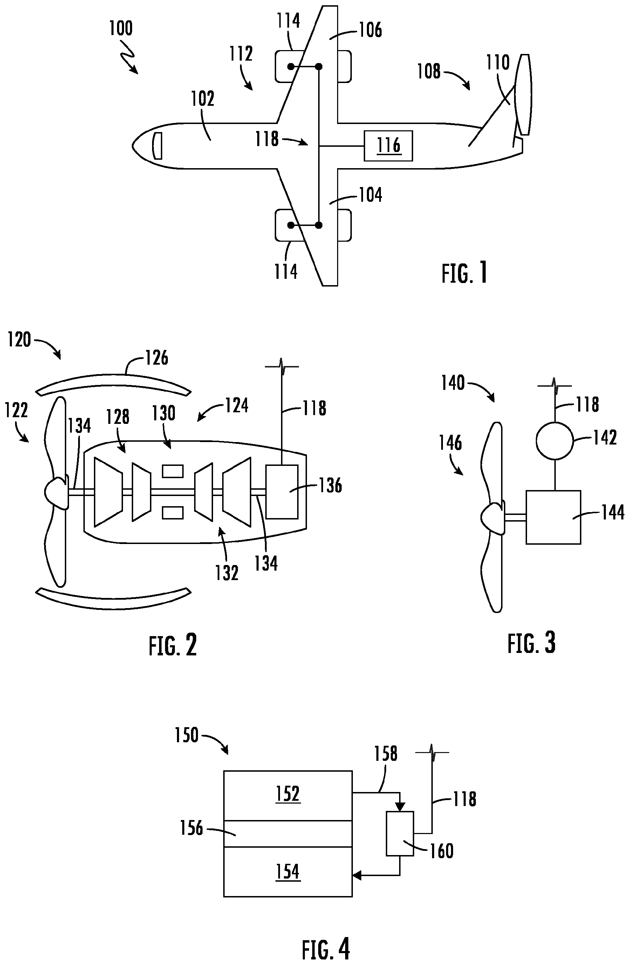

Referring now to the drawings, wherein identical numerals indicate the same elements throughout the figures, FIG. 1 is a schematic view of an aeronautical vehicle 100 in accordance with an exemplary embodiment of the present disclosure. The exemplary aeronautical vehicle 100 of FIG. 1 is configured as an aircraft. The aircraft generally includes a fuselage 102 forming a main body portion of the vehicle 100, a first wing 104 extending from a port side of the aircraft and a second wing 106 extending from a starboard side of the aircraft. The first and second wings 104, 106 each extend laterally from the fuselage 102. The aircraft further includes an empennage 108 having one or more stabilizer 110, and, in particular, including a vertical stabilizer and a horizontal stabilizer.

The vehicle 100 further includes a propulsion system 112 that includes one or more propulsors 114 and one or more power sources 116. The propulsion system 112 further includes an electric power distribution bus 118 electrical coupling various components of the propulsion system 112.

Referring now to FIG. 2, a schematic view of a propulsor as may be incorporated into the exemplary propulsion system 112 of the vehicle 100 of FIG. 1 is provided. More specifically, for the embodiment depicted, the propulsor is configured as a gas turbine engine 120, and more specifically, still, the gas turbine engine 120 of FIG. 2 is configured as a turbofan engine. The turbofan engine includes a fan section 122 and a turbomachine 124 drivingly coupled to the fan section 122. The turbofan engine further includes an outer nacelle 126 enclosing at least in part the fan section 122 and the turbomachine 124. The turbomachine 124 generally includes a compressor section 128, a combustion section 130, and a turbine section 132 arranged in serial flow order, and one or more shafts 134 connecting, e.g., a fan of the fan section 122, one or more compressors of the compressor section 128, and one or more turbines of the turbine section 132. Moreover, for the embodiment of FIG. 2, the turbofan engine further includes an electric machine 136 rotatable with the one or more shafts 134 of the turbomachine 124, with the fan section 122, or both. The electric machine 136 may be configured to extract electrical power from the turbofan engine and provide such electrical power to an electric power distribution bus 118, such as the electric power distribution bus 118 of FIG. 1. Additionally, or alternatively, the electric machine 136 may be configured to receive electric power from the electric power distribution bus 118 to, e.g., drive the fan of the fan section 122.

Referring now to FIG. 3, a schematic view of a propulsor as may be incorporated into the exemplary propulsion system 112 of the vehicle 100 of FIG. 1 in accordance with another exemplary aspect of the present disclosure is provided. For the embodiment of FIG. 3, the propulsor is configured as an electric fan 140. The electric fan 140 generally includes an inverter 142, an electric machine 144, and a fan 146.

The inverter 142 is configured to receive electrical power from, e.g., an electric power distribution bus 118 (such as the electric power distribution bus 118 of FIG. 1) and convert the received electrical power from, e.g., a direct-current ("DC") electrical power to an alternating current ("AC") electrical power. The electric machine 136 is configured as an electric motor configured to receive the electric power from the inverter 142 and convert the electric power into a mechanical, rotational force to drive the fan 146 and generate thrust.

Referring now to FIG. 4, a power source is provided, which may be incorporated into the exemplary propulsion system 112 of the vehicle 100 of FIG. 1 in accordance with an exemplary aspect of the present disclosure. The power source is more specifically a fuel cell 150. Fuel cells are electro-chemical devices which can convert chemical energy from a fuel into electrical energy through an electro-chemical reaction of the fuel, such as hydrogen, with an oxidizer, such as oxygen contained in the atmospheric air.

The fuel cell 150 of FIG. 4 includes an anode 152, a cathode 154, and an electrolyte layer 156 positioned between the anode 152 and the cathode 154. During operation, fuel, such as a hydrogen fuel, is provided to the anode 152 and an oxygen containing gas, such as air, is provided to the cathode 154. Within the anode 152, hydrogen molecules from the fuel may be separated into protons and electrons, with the electrolyte layer 156 allowing only protons to pass through to the cathode 154. The electrons travel through an external electrical circuit 158 which may be electrically coupled to an electric power distribution bus 118, such as the electric power distribution bus 118 of FIG. 1, through a juncture box 160 (including e.g., various power electronics). At the cathode 154, protons, electrons, and oxygen are combined to form water as a byproduct.

As will be appreciated, the vehicle 100 depicted in FIG. 1 is provided by way of example only, and, in other exemplary embodiments, aspects of the present disclosure may be incorporated into any other suitable aeronautical vehicle 100. Similarly, the propulsors depicted in FIGS. 1 through 3 are also provided by way of example only. In other exemplary embodiments, aspects of the present disclosure may be incorporated into, or otherwise utilized with, any other suitable propulsors, such as any other suitable gas turbine engines having an electric machine (e.g., other turbofan engines, open rotor turbofan engines, turboprop engines, turboshaft engines, turbojet engines), any other suitable electric fans (e.g., ducted fans, distributed fan, vertical thrust fans, horizontal thrust fans, combination fans), or the like.

Further, it will be appreciated that the fuel cell 150 depicted as the power source in FIG. 4 may be any suitable type of fuel cell. Further, although a single fuel cell is depicted in FIG. 4, it will be appreciated that, as used herein, the term "fuel cell" may refer to a single fuel cell or an array of fuel cells connected to one another for providing an electrical power output. In particular, as a single fuel cell may only be able to generate on the order of 1 volt voltage, a plurality of fuel cells may be stacked together (which may be referred to as a fuel cell stack). One or more fuel cell stacks may form a fuel cell module, and one or more fuel cell modules may for a fuel cell system to generate a desired voltage. Further, the fuel cell may be of any suitable chemistry. For example, the fuel cell 150 may include Solid Oxide Fuel Cells (SOFC), Molten Carbonate Fuel Cells (MCFC), Phosphoric Acid Fuel Cells (PAFC), and Proton Exchange Membrane Fuel Cells (PEMFC), all generally named after their respective electrolyte layers. Each of these fuel cells may have specific benefits in the form of a preferred operating temperature range, power generation capability, efficiency, etc.

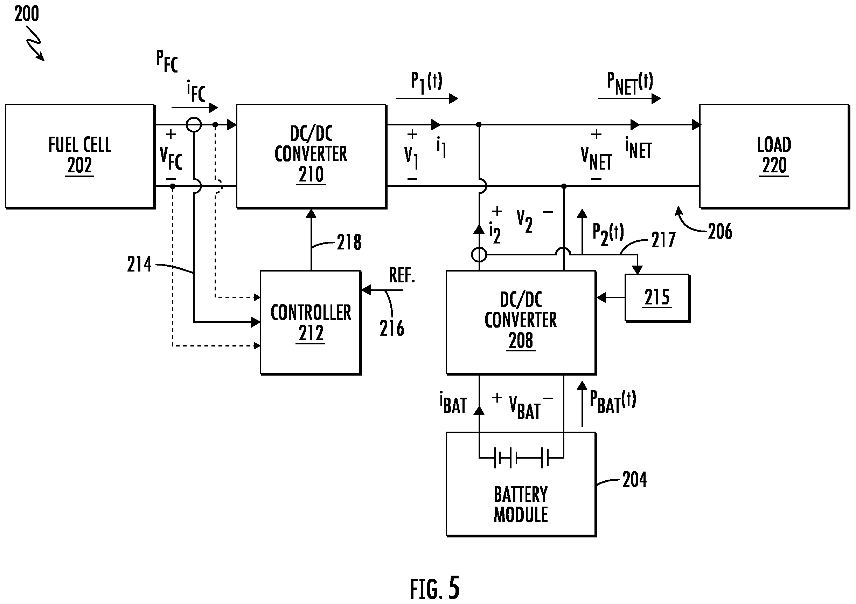

Referring now to FIG. 5, a schematic diagram of a power source assembly 200 for an aeronautical vehicle in accordance with an exemplary aspect of the present disclosure is provided. The exemplary power source assembly 200 of FIG. 5 may be integrated into one or more of the exemplary aeronautical vehicles described herein (see, e.g., vehicle 100 of FIG. 1), may be used with one or more of the propulsors described herein (see, e.g., FIGS. 2 and 3), and may utilize one or more of the exemplary power sources described herein (see, e.g., FIG. 4).

More specifically, FIG. 5 schematically depicts an electric circuit for the power source assembly 200. As will be appreciated, the power source assembly 200 includes a fuel cell module 202, a battery module 204, a direct-current electric bus 206, a battery DC/DC converter 208, a fuel cell DC/DC converter 210, and a controller 212.

Briefly, it will further be appreciated that for the embodiment depicted, the power source assembly 200 includes a controller 215 operably coupled to the battery DC/DC converter 208 and configured to receive data indicative of a regulated battery direct-current voltage output V₂, as is indicated by line 217. However, in other embodiments, the data received by the controller 215 may be regulated power output, regulated current output, or some combination thereof. The controller 215 is configured to control the battery module 204 based on the received data indicative of the regulated battery direct-current voltage output V₂.

The fuel cell module 202 may include one or more fuel cell stacks (which, in turn, may include a plurality fuel cells, such as a plurality of the fuel cell 150 of FIG. 4) and is configured to provide a fuel cell module direct-current power output P_{FC} during, e.g., an operating condition of the power source assembly 200. In particular, the fuel cell module 202 is configured to provide a fuel cell voltage output V_{FC} and a fuel cell module current output I_{FC} during the operating condition of the power source assembly 200. The fuel cell module 202 may be configured to generate a maximum power output of at least 100 kilowatts (kW) and up to 2,000 kW, such as between 200 kW and 1,200 kW.

The battery module 204 is configured to provide a battery direct-current power output P_{BAT} during, e.g., the operating condition of the power source assembly 200. In particular, the battery module 204 is configured to provide a battery voltage output V_{BAT} and a battery current output I_{BAT} during the operating condition of the power source assembly 200. The battery module 204 may be configured in any suitable manner to store electrical power. In certain exemplary embodiments, the battery module 204 may include one or more lithium-ion batteries, and/or one or more batteries of other suitable chemistry.

The battery module 204 may be configured to store at least 17 kilowatt-hours (kWh) and up to 30 kWh. In such a manner, as will be appreciated from the description herein, a storage capacity of the battery module 204 may be relatively low compared to a maximum power output of the fuel cell module 202. For example, a ratio of the storage capacity of the battery module 204 to a maximum power output of the fuel cell module 202 may be less than 30kWh to 850 kW (which is an equivalent of less than 2 minutes and seven seconds of maximum power output).

The battery DC/DC converter 208 is in cascade electrical connection with the battery module 204 and more specifically is in direct cascade electrical connection with the battery module 204. As used herein, the term "direct cascade electrical connection" refers to a cascade electrical connection between two components with no power electronics in electrical connection therebetween.

The battery DC/DC converter 208 is configured to regulate its output voltage V2 from the battery module 204, while allowing for a varying battery current output I_{BAT} as may be needed. The regulated battery direct-current power output may be positive, as is indicated in the arrows of FIG. 5, or may be negative (charging the battery module 204).

The fuel cell DC/DC converter 210 is in cascade electrical connection with the fuel cell module 202 to receive the fuel cell module direct-current power output P_{FC} . More specifically, for the embodiment depicted, the fuel cell DC/DC converter 210 is in direct cascade electrical connection with the fuel cell module 202. The fuel cell DC/DC converter 210 is configured to regulate the fuel cell module voltage output V_{FC} from the fuel cell module 202 (or the fuel cell module current output I_{FC}, or vice versa). As will be appreciated, the fuel cell DC/DC converter 210 is a unidirectional DC/DC converter, only allowing electricity flow from the fuel cell module 202.

The controller 212 is operably coupled to the fuel cell DC/DC converter 210 and is configured to receive data indicative of the fuel cell module direct-current power output P_{FC} , as is indicated by line 214. The data indicative of the fuel cell module direct-current power output P_{FC} is, for the embodiment shown, the fuel cell module current output I_{FC} from the fuel cell module 202. However, as is indicated in phantom, in other embodiments, the data indicative of the fuel cell module direct-current power output P_{FC} may be the fuel cell module voltage output V_{FC} from the fuel cell module 202.

The controller 212 is configured to control the fuel cell DC/DC converter 210 based on the received data indicative of the fuel cell module direct-current power output P_{FC} to maintain a slew rate from the fuel cell module 202 within a slew rate range for the fuel cell module 202, as is discussed below. (Notably, the controller 212 therefore is configured to operate in a differ manner than controller 215.) It will be appreciated, that as used herein, the term "slew rate" as it relates to a fuel cell module 202 refers to a rate of change of the fuel cell module direct-current voltage output V_{FC} of the fuel cell module 202, expressed in a measure of power per unit of time, e.g., kilowatts per second (kW/s), volts per second (V/s), or amps per second (A/s).

Further, for the embodiment depicted, the controller 212 is further configured to receive data indicative of a reference power level, as is indicated by line 216. The reference power level may be a desired power output for the power source assembly 200, such as a desired power level for a net direct-current power output P_{NET}, discussed in more detail below. When the reference power level indicates that the fuel cell module direct-current power output P_{FC} needs to be higher or lower than the current fuel cell module direct-current power output P_{FC} , the controller 212 may vary a control signal 218 to the fuel cell DC/DC converter 210 to increase or decrease the fuel cell module direct-current power output P_{FC} to meet the power demands indicated by the reference power level. However, the increase and/or decrease of fuel cell module direct-current power output P_{FC} may be at a controlled rate to ensure the rate of change of the fuel cell module direct-current power output P_{FC} is sufficiently low to prevent or minimize premature wearing of the fuel cell module 202.

The control signal 218 may be data indicative of a duty cycle of a power switch. The duty cycle is a measure of the "on" time of the power switch relative to the total period of a cycle. By adjusting the duty cycle, the controller 212 can effectively regulate the power output of the fuel cell DC/DC converter 210, ensuring that the load 220 receives the necessary power.

In such a manner, it will be appreciated that the fuel cell DC/DC converter 210 is operated and controlled based on the fuel cell module direct-current power output P_{FC} provided to the fuel cell DC/DC converter 210 from the fuel cell module 202, the reference power level, and a slew rate factor for the fuel cell module 202. The slew rate factor may be indicative of a maximum allowable slew rate for the fuel cell module 202 without the fuel cell module 202 prematurely degrading or wearing.

The fuel cell DC/DC converter 210 may therefore control the fuel cell module 202 based on the amount of power coming out of the fuel cell module 202, and not based on a commanded net direct-current power output P_{NET}, e.g., the load power.

Referring still to FIG. 5, the fuel cell module 202 and fuel cell DC/DC converter 210 are further in electrical connection with the direct-current electric bus 206 to provide a regulated fuel cell module 202 power output P1 to the direct-current electric bus 206. Further, for the embodiment shown, the battery DC/DC converter 208 and battery module 204 are in parallel electrical connection with the fuel cell DC/DC converter 210 and fuel cell module 202 to collectively provide the net direct-current power output P_{NET} to the direct-current electric bus 206.

In such a manner, it will be appreciated that the fuel cell module 202 may be controlled using the controller 212 and fuel cell DC/DC converter 210 to react to changes in reference power levels for the power source assembly 200 without exceeding a slew rate range for the fuel cell module 202. In order to ensure power output demands are met (i.e., that the net direct-current power output PNET is at a desired level), the battery module may provide instantaneous increases and decreases in its power to meet the increase and decrease rates of the propulsion or load power (220) as limited by the DC/DC converter (208) closed loop response. In certain embodiments, the DC/DC converter 208 may respond to load power changes in less than 10 milli seconds (ms), such as in less than 5 ms.

The direct-current electric bus 206 is further configured to provide the net direct-current power output P_{NET} to a load 220. The load 220 may be, e.g., an electric propulsor of an aeronautical vehicle (see, e.g., FIGS. 2 and 3). In such manner, it will be appreciated that the load 220 may include an inverter (not shown; e.g., to convert the net direct-current power output P_{NET} to an alternating current power output) and an electric machine to drive a propulsor.

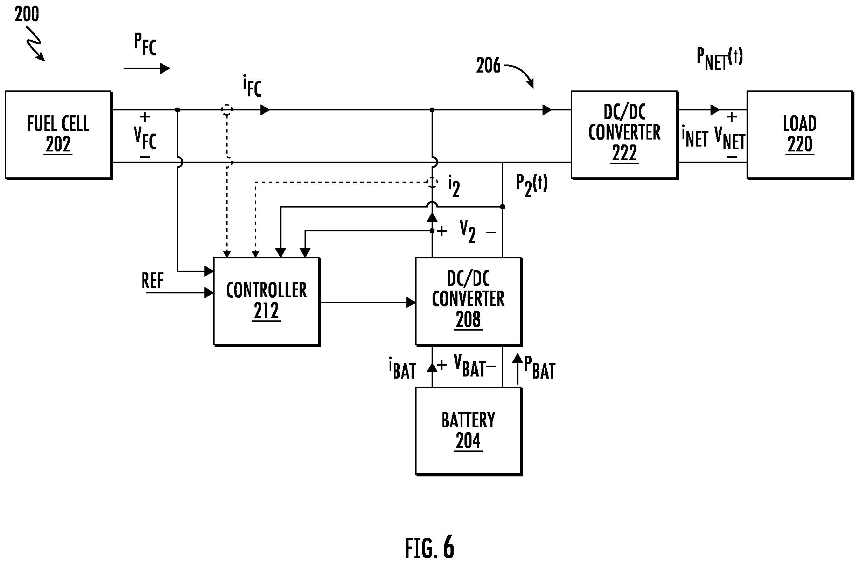

Referring now to FIG. 6, a power source assembly 200 in accordance with another exemplary aspect of the present disclosure is provided. The exemplary power source assembly 200 of FIG. 6 may be configured in a similar manner as exemplary power source assembly 200 of FIG. 5.

For example, the exemplary power source assembly 200 of FIG. 6 generally includes a fuel cell module 202 configured to provide a fuel cell module direct-current power output P_{FC} (and a fuel cell module direct-current voltage output V_{FC} and fuel cell module direct-current current output I_{FC}), a battery module 204 configured to provide a battery direct-current power output P_{BAT} (and a battery direct-current voltage output V_{BAT} and battery direct-current current output I_{BAT}), a direct-current electric bus 206 configured to provide a net direct-current power output P_{NET} to a load 220, a battery DC/DC converter 208, and a controller 212.

The battery DC/DC converter 208 is in cascade electrical connection with the battery module 204, and more specifically is in direct cascade electrical connection with the battery module 204. However, for the embodiment depicted, the power source assembly 200 does not include a fuel cell DC/DC converter in direct cascade electrical connection with the fuel cell module 202, and instead the power source assembly 200 includes a second DC/DC converter 222 in electrical connection with the fuel cell module 202 and the battery DC/DC converter 208 for receiving electrical power from both the fuel cell module 202 and the battery DC/DC converter 208. In particular, for the embodiment depicted, the battery DC/DC converter 208 (and battery module 204) and the fuel cell module 202 are in parallel electrical connection with one another for providing electrical power to the second DC/DC converter 222.

In particular, for the embodiment depicted, output terminals of the battery DC/DC converter 208 are electrically coupled to output terminals of the fuel cell module 202.

Further, for the embodiment of FIG. 6, the controller 212 is operably coupled to the battery DC/DC converter 208 and is configured to receive data indicative of the fuel cell module direct-current power output P_{FC} (e.g., fuel cell module direct-current voltage output V_{FC}, fuel cell module direct-current current output I_{FC}, or both). Specifically, for the embodiment depicted, the battery DC/DC converter 208 is configured to receive data indicative of the fuel cell module direct-current current output I_{FC}.

The controller 212 is configured to control the battery DC/DC converter 208 based on the data received indicative of the fuel cell module direct-current power output P_{FC} to maintain a slew rate from the fuel cell module 202 within a slew rate range for the fuel cell module 202. In such a manner, it will be appreciated that the battery module 204 provides a sufficient amount of power in response to an increased electrical power demand from the power source assembly 200 to ensure any changes in the power output from the fuel cell module 202 does not exceed the slew rate range for the fuel cell module 202.

Additionally, alternatively, it will be appreciated the battery module 204 is configured to absorb a sufficient amount of power from the fuel cell module 202 in response to a decreased electrical power demand from the power source assembly 200 to ensure a power output from the fuel cell module 202 does not exceed the slew rate range for the fuel cell module 202. Such a configuration may limit output power rise and fall rates for the fuel cell module 202.

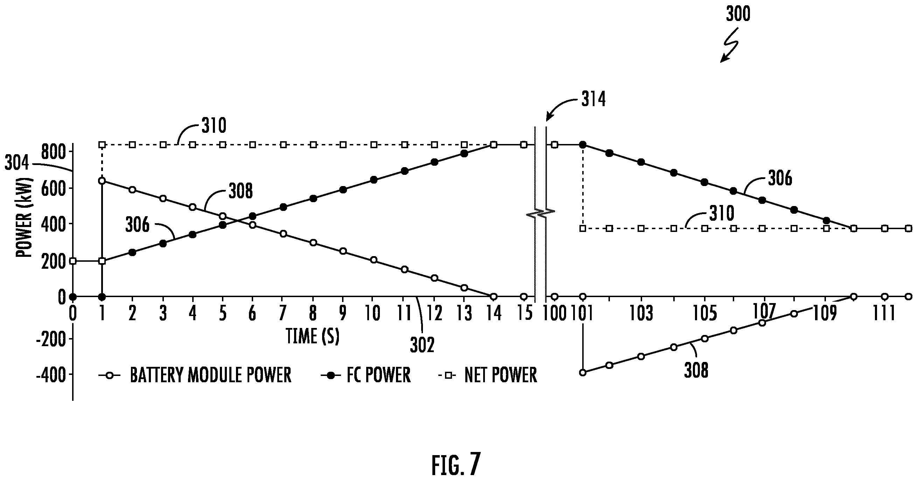

Referring now briefly to FIG. 7, a graph 300 is provided depicting a split of a net output power of a power source assembly in accordance with an exemplary aspect of the present disclosure. The exemplary power source assembly represented in the graph of FIG. 7 may be one or more of the power source assemblies described herein, such as the power source assembly 200 of FIG. 5 or the power source assembly 200 of FIG. 6.

The graph of FIG. 7 depicts a unit of time on an x-axis 302, and more specifically seconds (s), and a power output on a y-axis 304, and more specifically, kilowatts. A fuel cell module direct-current power output P_{FC} is indicated by line 306, a battery direct-current power output P_{BAT} is indicated by line 308, and a net direct-current power output P_{NET} is indicated by line 310.

At time equals zero seconds, the net direct-current power output is 200 kW. At time equals zero seconds, the fuel cell module 202 provides substantially 100% of the net direct-current power output (i.e., the fuel cell module direct-current power output P_{FC} equals 200 kW, and the battery direct-current power output P_{BAT} equals 0 kW).

At time equals one second, a reference power level for the power source assembly 200 is increased from a first power level (200 kW) to a second power level (850 kW). At time equals one second, the fuel cell module 202 power output remains at the first power level (200 kW), and the battery direct-current power output P_{BAT} substantially instantaneously increases in an amount equal to the second power level minus the first power level (i.e., increases from 0 kW to 650 kW) to allow for the net direct-current power output P_{NET} of the power source assembly 200 to meet the reference power level demand.

As the time increases from one second to 14 seconds, the fuel cell module direct-current power output P_{FC} is incrementally increased from the first power level to the second power level (200 kW to 850 kW), while the battery direct-current power output P_{BAT} is decreased from the initial level (equal to the second power level minus the first power level; 650 kW) to 0 kW. As will be appreciated, a slew rate of the fuel cell module is shown graphically from time equals 0 to time equals 14 seconds, the slew rate being 50 kW/s (650 kW divided by 13 seconds).

Such a configuration may allow for the power source assembly to provide sustained power output without prematurely wearing or degrading the fuel cell module in response to increases in reference power level demands on the power source assembly. Further, such a configuration may allow for a substantially smaller capacity battery module as the battery module may only be required to provide power during power changes with the propulsion system. As an example, a propulsion power system rated at 1MW may require only a 17kWh battery to regulate voltage of the direct-current electric bus 206 with only 2% voltage droop with 3mF capacitance on the direct-current electric bus 206 when propulsion power has 650kW of increase in 100ms.

Referring still to FIG. 7, it will be appreciated that in further exemplary aspects, when, there may be a decrease in a reference power level demanded of the power source assembly 200, such that the power "output" of the battery module may be negative, such that it may receive electrical power from the fuel cell module to substantially instantaneously accommodate a demanded decrease in reference power level demand of the power source assembly, while allowing for the fuel cell module to more slowly ramp down to the demanded power level.

In particular, at a later time, as is indicated by break 314, such as at time equals 100 seconds, the net direct-current power output is 850 kW. At time equals 100 seconds, the fuel cell module 202 provides substantially 100% of the net direct-current power output (i.e., the fuel cell module direct-current power output P_{FC} equals 850 kW, and the battery direct-current power output P_{BAT} equals 0 kW).

At time equals 101 seconds, a reference power level for the power source assembly 200 is decreased from a third power level (850 kW) to a fourth power level (400 kW). At time equals 101 seconds, the fuel cell module 202 power output remains at the third power level (850 kW), and the battery direct-current power output P_{BAT} substantially instantaneously decreases in an amount equal to the fourth power level minus the third power level (i.e., decreases from 0 kW to -450 kW) to allow for the net direct-current power output P_{NET} of the power source assembly 200 to meet the reference power level demand. In such a manner, it will be appreciated that the battery module 204 may absorb 450 kW, effectively charging the battery module 204.

As the time increases from 101 seconds to 110 seconds, the fuel cell module direct-current power output P_{FC} is incrementally decreased from the third power level to the fourth power level (850 kW to 400 kW), while an amount of power being absorbed by the battery module 204 is decreased from the initial level (equal to the fourth power level minus the third power level; -400 kW) to 0 kW. As will be appreciated, a slew rate of the fuel cell module is shown graphically from time equals 101 second to time equals 110 seconds, the slew rate being 50 kW/s.

Such a configuration may allow for the power source assembly to provide sustained power output without prematurely wearing or degrading the fuel cell module in response to decreases in reference power level demands on the power source assembly. Further, such a configuration may allow for the battery module 204 to be recharged during transition periods, further reducing a requisite size for the battery module 204.

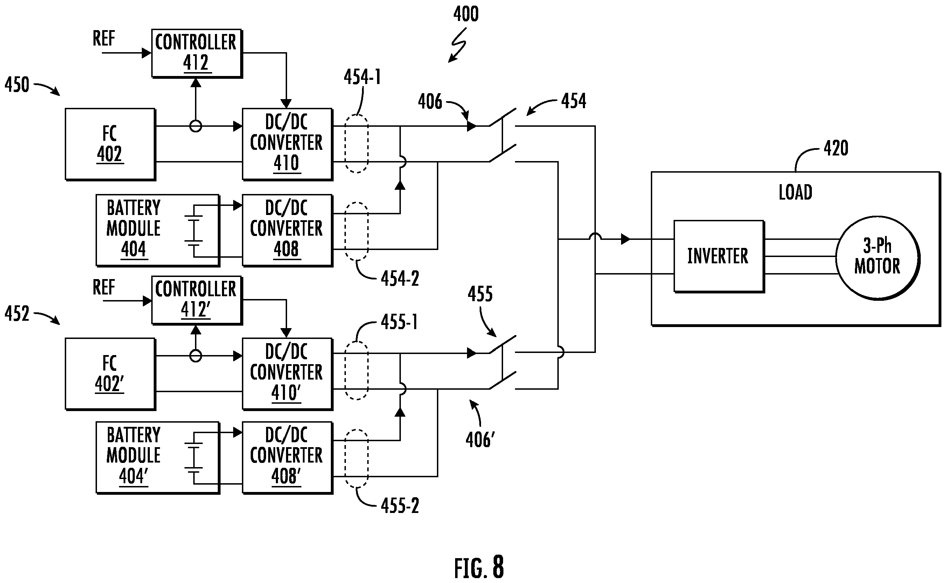

Referring now to FIG. 8, a power source assembly 400 in accordance with another exemplary aspect of the present disclosure is provided. The exemplary power source assembly 400 of FIG. 8 may be configured in a similar manner as one or more of the exemplary embodiments described above with reference to FIGS. 1 through 7.

More specifically, for the embodiment of FIG. 8, the power source assembly 400 is configured in a similar manner as the exemplary power source assembly 200 described above with reference to FIG. 5. Accordingly, the exemplary power source assembly 400 generally includes a fuel cell module 402, a battery module 404, a battery DC/DC converter 408, a fuel cell DC/DC converter 410, a controller 412, and a direct-current electric bus 406.

However, for the embodiment depicted, the fuel cell module 402, the battery module 404, the battery DC/DC converter 408, the controller 412, the fuel cell DC/DC converter 410, and the direct-current electric bus 406 together form a first power assembly 450 and the power source assembly 400 further includes a second power assembly 452. The second power assembly 452 is configured in substantially the same manner as the first power assembly 450. Accordingly, it will be appreciated that the second power assembly 452 further includes a fuel cell module 402', a battery module 404', a battery DC/DC converter 408', a controller 412', a fuel cell DC/DC converter 410', and a direct-current electric bus 406'. The second power assembly 452 may be configured in substantially the same manner as the first power assembly 450, and may operate in substantially the same manner as the first power assembly 450. Accordingly, the components of the second power assembly 452 may also be configured in the same manner as the components of the power source assembly 200 described above with reference to FIG. 5.

However, for the embodiment of FIG. 8, the power source assembly 450 includes redundancy benefits. In particular, the second power assembly 452 provides redundancy to the first power assembly 450. Accordingly, it will be appreciated that the direct-current electric bus 406 of the first power assembly 450 includes a switch 454 to selectively electrically connect or disconnect the first power assembly 450 to a load 420, and similarly, the direct-current electric bus 406' of the second power assembly 452 includes a switch 455 to selectively electrically connect or disconnect the second power assembly 452 to the load 420.

In such manner, the second power assembly 452 may be connected to the load 420 in the event of a failure of the first power assembly 450 to ensure the load 420 continues to receive electrical power during the failure condition.

Additionally, alternatively, each of the first power assembly 450 and the second power assembly 452 may be configured to provide less than 100% of an anticipated maximum power draw requested by the load 420, such that during a normal operating condition (e.g., a high power operating condition), both the first and second power assemblies 450, 452 provide electrical power to the load 420. With such a configuration, in the event of a failure of one of the first power assembly 450 or second power assembly 452, the other of the first power assembly 450 or the second power assembly 452 may ensure that the load 220 is capable of receiving at least some electric power during the failure condition.

Moreover, as is depicted in phantom in FIG. 8, the first power assembly 450 may alternatively include switches located at 454-1 (dedicated to the fuel cell module 402) and/or at 454-2 (dedicated to the battery module 404). Such a configuration may allow for one of the fuel cell module 402 or battery module 404 to contribute to the operation of the power source assembly 400 in the event of a failure of the other. Similarly, as is also depicted in phantom in FIG. 8, the second power assembly 452 may alternatively include switches located at 455-1 (dedicated to the fuel cell module 402') and/or at 455-2 (dedicated to the battery module 404'). Such a configuration may similarly allow for one of the fuel cell module 402' or battery module 404' to contribute to the operation of the power source assembly 400 in the event of a failure of the other.

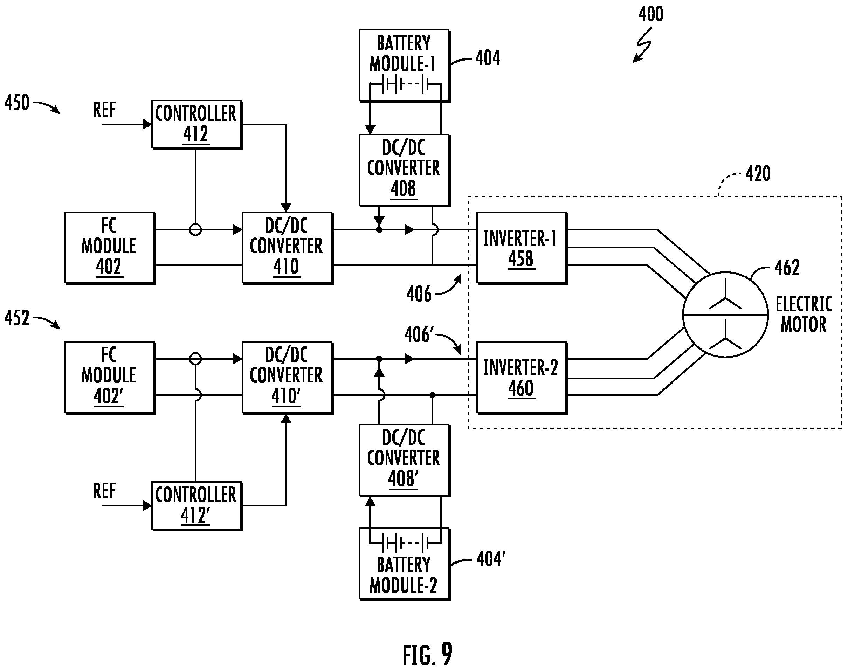

Further, referring now to FIG. 9, a power source assembly 400 in accordance with yet another exemplary embodiment of the present disclosure is provided. The exemplary power source assembly 400 of FIG. 9 is configured in substantially the same manner as exemplary power source assembly 400 of FIG. 8. However, for the embodiment of FIG. 9, a load 420 includes a first inverter 458 electrically coupled to a direct-current electric bus 406 of a first power assembly 450 and a second inverter 460 electrically coupled to a direct-current electric bus 406' of a second power assembly 452. An electric motor 462 of the load 420 may be configured to receive alternating current electric power from the first inverter 458, the second inverter 460, or both.

The power source assembly 400 of FIG. 9 may operate in substantially the same manner as the power sources assembly 400 of FIG. 8, but may further provide redundancy in the load 220 by inclusion of dedicated inverters 458, 460 for the first power assembly 450 and the second power assembly 452, respectively

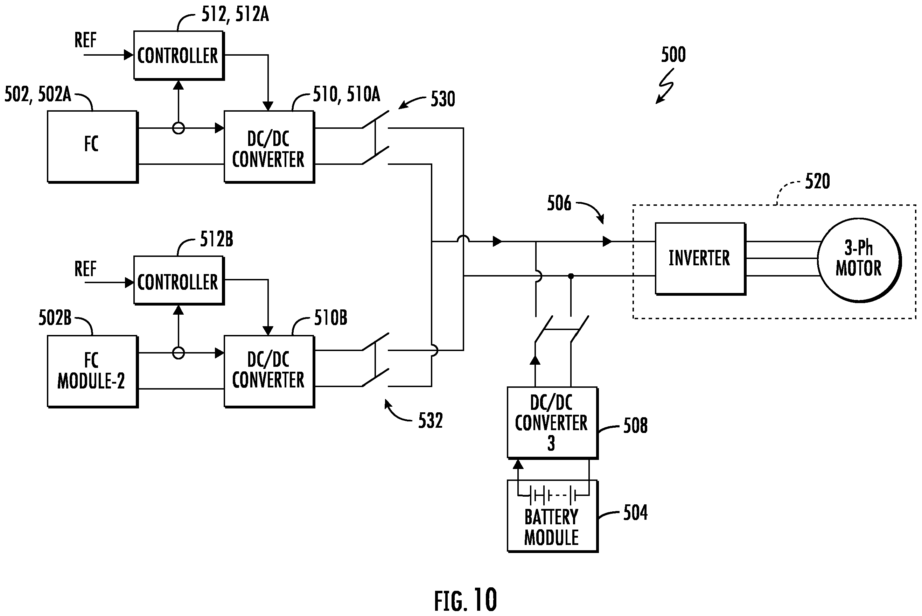

Referring now to FIG. 10, a schematic view of a power source assembly 500 in accordance with yet another exemplary embodiment of the present disclosure is provided. The exemplary power source assembly 500 of FIG. 10 may be configured in a similar manner as one or more of the power source assemblies 200, 400 described herein above.

For example, the exemplary power source assembly 500 of FIG. 10 generally includes a fuel cell module 502 configured to provide a fuel cell module direct-current power output P_{FC} , a battery module 504 configured to provide a battery direct-current power output P_{BAT}, a direct-current electric bus 506 configured to provide a net direct-current power output P_{NET} to a load 520, a fuel cell DC/DC converter 510 in electrical connection with the direct-current electric bus 506, and a controller 512 operably coupled to the fuel cell DC/DC converter 510. More specifically, for the embodiment depicted, the fuel cell DC/DC converter 510 is in direct cascade electrical connection with the fuel cell module 502, and the controller 512 is configured to control the fuel cell DC/DC converter 510 based on data received indicative of the first direct-current power output to maintain a slew rate from the fuel cell module 502 within a slew rate range of fuel cell module 502.

However, for the embodiment of FIG. 10, the power source assembly 500 includes structure to introduce redundancy for the fuel cell module 502. In particular, the fuel cell module 502 is a first fuel cell module 502A, the fuel cell DC/DC converter 510 is a first fuel cell DC/DC converter 510A, and the controller 512 is a first controller 512A. The power source assembly 500 further includes a second fuel cell module 502B, a second fuel cell DC/DC converter 510B arranged in cascade electrical connection with the second fuel cell module 502B, and a second controller 512B operably coupled to the second fuel cell DC/DC converter 510B and configured to control the second fuel cell DC/DC converter 510B based on data received indicative of a second fuel cell module direct-current power output P_{FC} 2 from the second fuel cell module 502B to maintain a slew rate from the second fuel cell module 502B within a slew rate range of the second fuel cell module 502B.

The power source assembly 500 further includes a first switch 530 downstream of the first fuel cell DC/DC converter 510A and a second switch 532 downstream of the second fuel cell DC/DC converter 510B. In such a manner, the power source assembly 500 may electrically connect or disconnect the first fuel cell module 502A/ first fuel cell DC/DC converter 510A to the direct-current electric bus 506, and similarly may selectively electrically connect or disconnect the second fuel cell module 502B/ second fuel cell DC/DC converter 510B to the direct-current electric bus 506, in response to, e.g., a fault condition of one or more components of the power source assembly 500.

Briefly, it will further be appreciated that the power source assembly 500 further includes a battery module 504 and a battery DC/DC converter 508. The battery module 504 and battery DC/DC converter 508 may provide the same functionality as the battery module 204 and battery DC/DC converter 208 described above with reference to, e.g., FIGS. 5 and 7.

As noted, the various power source assemblies 200, 400, 500 of the present disclosure may include one or more controllers 212, 412, 412', 512A, 512B configured to receive the data and, e.g., may make control decisions for the respective power source assemblies 200, 400, 500 based on the received data.

In one or more exemplary embodiments, the one or more controllers 212, 412, 412', 512A, 512B of the present disclosure may be stand-alone controllers for the power source assemblies 200, 400, 500, or alternatively, may be integrated into one or more of a controller for the vehicle with which the power source assemblies 200, 400, 500 are integrated, a controller for a propulsor, etc.

Further, it will be appreciated that although the embodiment of FIG. 8 includes a power source assembly 400 configured in a similar manner as the exemplary power source assembly 200 described above with reference to FIG. 5, in other embodiments the power source assembly 400 may alternatively be configured in a similar manner as the exemplary power source assembly 200 of FIG. 6 (e.g., the first power assembly 450 and the second power assembly 452 may each be configured in the same manner as the components of the exemplary power source assembly 200 of FIG. 6 up to the direct-current electric bus 206).

.Further, still, it will be appreciated that although the embodiment of FIG. 9 includes the power source assembly 400 configured in a similar manner as the exemplary power source assembly 200 described above with refence to FIG. 5, in other embodiments the power source assembly 400 may alternatively be configured in a similar manner as the exemplary power source assembly 200 of FIG. 6 (e.g., the first power assembly 450 and the second power assembly 452 may each be configured in the same manner as the components of the exemplary power source assembly 200 of FIG. 6 up to the direct-current electric bus 206).

Further, still, it will be appreciated that although FIGS. 8 through 10 each disclose two redundant fuel cell module and battery module groups, in other exemplary embodiments, the power source assemblies may include any suitable number of redundant fuel cell module and battery module groups (e.g., 3, 4, 5, 6, 7, 8, or up to 10).

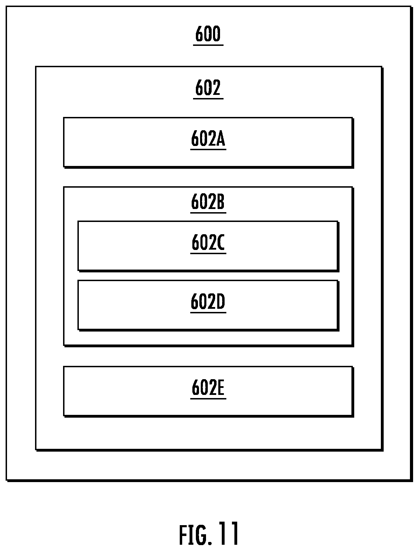

Referring particularly FIG. 11, the operation of a controller 600, which may be one or more of the controllers 212, 412, 412', 512A, 512B, will be described. In at least certain embodiments, the controller 600 can include one or more computing device(s) 602. The computing device(s) 602 can include one or more processor(s) 602A and one or more memory device(s) 602B. The one or more processor(s) 602A can include any suitable processing device, such as a microprocessor, microcontroller, integrated circuit, logic device, and/or other suitable processing device. The one or more memory device(s) 602B can include one or more computer-readable media, including, but not limited to, non-transitory computer-readable media, RAM, ROM, hard drives, flash drives, and/or other memory devices.

The one or more memory device(s) 602B can store information accessible by the one or more processor(s) 602A, including computer-readable instructions 602C that can be executed by the one or more processor(s) 602A. The instructions 602C can be any set of instructions that when executed by the one or more processor(s) 602A, cause the one or more processor(s) 602A to perform operations. In some embodiments, the instructions 602C can be executed by the one or more processor(s) 602A to cause the one or more processor(s) 602A to perform operations, such as any of the operations and functions for which the controller 600 and/or the computing device(s) 602 are configured, the operations for operating power source assemblies 200, 400, 500, as described herein, and/or any other operations or functions of the one or more computing device(s) 602. The instructions 602C can be software written in any suitable programming language or can be implemented in hardware. Additionally, and/or alternatively, the instructions 602C can be executed in logically and/or virtually separate threads on the one or more processor(s) 602A. The one or more memory device(s) 602B can further store data 602D that can be accessed by the one or more processor(s) 602A. For example, the data 602D can include data indicative of power flows, data indicative of engine/ aircraft operating conditions, and/or any other data and/or information described herein.

The computing device(s) 602 can also include a network interface 602E used to communicate, for example, with the other components of the power source assemblies 200, 400, 500, the vehicle incorporating the power source assemblies 200, 400, 500, etc. For example, in the embodiment depicted, as noted above, the power source assemblies 200, 400, 500 include one or more sensors for sensing data indicative of one or more parameters (e.g., power level, current level, voltage). The controller 600 is operably coupled to the one or more sensors through, e.g., the network interface, such that the controller 600 may receive data indicative of various operating parameters sensed by the one or more sensors during operation. In such a manner, the controller 600 may be configured to operate the power source assemblies 200, 400, 500 in response to, e.g., the data sensed by the one or more sensors.

The network interface 602E can include any suitable components for interfacing with one or more network(s), including for example, transmitters, receivers, ports, controllers, antennas, and/or other suitable components.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

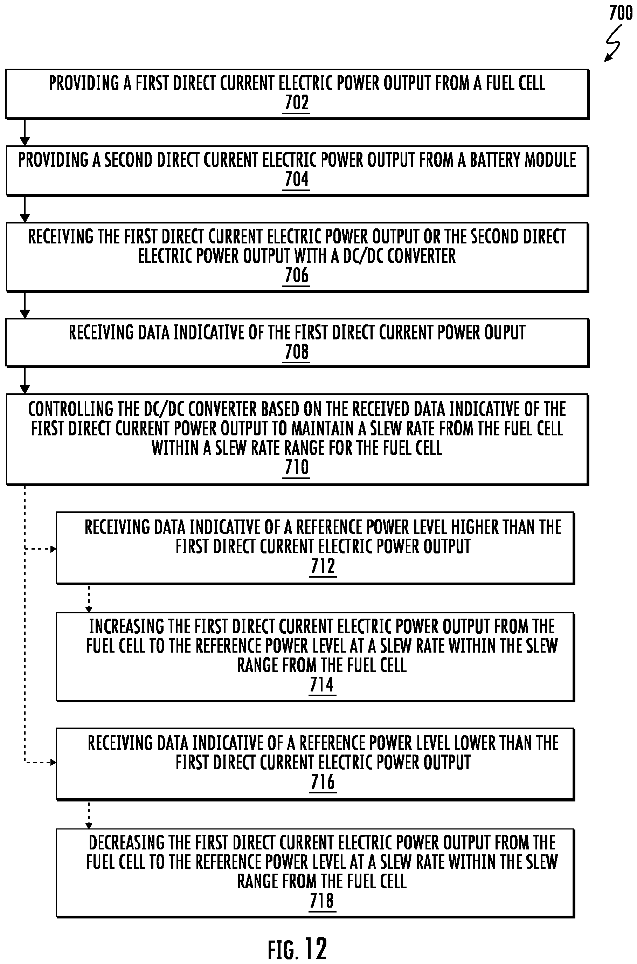

Referring now to FIG. 12, it will be appreciated that the present disclosure may further provide for a method 700 of operating a power source assembly for an aeronautical vehicle. The method 700 may be utilized with one or more of the power source assemblies described above with reference to FIGS. 1 through 11.

In one exemplary aspect, the method 700 includes at (702) providing a first direct current electric power output from a fuel cell module; at (704) providing a second direct current electric power output from a battery module; and at (706) receiving the first direct current electric power output or the second direct current electric power output with a DC/DC converter.

The exemplary method 700 of FIG. 12 further includes at (708) receiving data indicative of the first direct current power output; and at (710) controlling the DC/DC converter based on the received data indicative of the first direct current power output to maintain a slew rate from the fuel cell module within a slew rate range for the fuel cell module.

In at least certain exemplary aspects, controlling the DC/DC converter based on the received data indicative of the first direct current power output to maintain the slew rate from the fuel cell module within the slew rate range for the fuel cell module comprises at (710) may include at (712) receiving data indicative of a reference power level higher than the first direct current electric power output; and at (714) increasing the first direct current electric power output from the fuel cell module to the reference power level at a slew rate within the slew rate range from the fuel cell module. With such an exemplary aspect, the second direct current electric power output may be equal to a difference between the reference power level and the first direct current electric power output, e.g., while increasing the first direct current electric power output at (714).

Additionally, or alternatively, in at least certain exemplary aspects, controlling the DC/DC converter based on the received data indicative of the first direct current power output to maintain the slew rate from the fuel cell module within the slew rate range for the fuel cell module comprises at (710) may include at (716) receiving data indicative of a reference power level lower than the first direct current electric power output; and at (718) decreasing the first direct current electric power output from the fuel cell module to the reference power level at a slew rate within the slew rate range from the fuel cell module. With such an exemplary aspect, the second direct current electric power output may be equal to a difference between the reference power level and the first direct current electric power output, e.g., while decreasing the first direct current electric power output at (718). For example, in certain exemplary aspects, the second direct current electric power output may be a negative power output.

As will be appreciated, sudden power demands of propulsion system during a flight may pose reliability and life concerns for a fuel cell system if a fuel cell system directly powers the propulsion inverter without an Auxiliary Energy Storage System (AESS), e.g., a battery, since fuel cell systems are generally suitable to operate either under constant load current or under the condition that fuel cell load current varies very slowly (in the order of several seconds). If PEMFC is subjected to sudden load current changes, the catalyst in the Membrane Electrode Assembly (MEA) may be dissolved and low reactant condition could also take place depending on the amplitude of the sudden load change, both of which shorten the life of a PEMFC. Architectures and controls of the present disclosure minimize the size of the battery when combined with a fuel cell system without compromising the fuel cell reliability and its life by slowing down the reaction speed of the fuel cell to propulsion power changes. They also enable tight voltage regulation of the DC bus at the input of the propulsion inverter. Embodiments in FIGS. 8, 9, 10 further provide improved fault tolerance through redundancy of the electric power system components.

Further aspects are provided by the subject matter of the following clauses:

A power source assembly for an aeronautical vehicle, the power source assembly comprising: a fuel cell module configured to provide a first direct current power output; a battery module configured to provide a second direct current power output; a direct current electric bus configured to provide a net direct current power output to a load; a DC/DC converter in electrical connection with the direct current electric bus, the DC/DC converter configured to receive the first direct current power output from the fuel cell module or the second direct current power output from the battery module; and a controller operably coupled to the DC/DC converter and configured to receive data indicative of the first direct current power output, the controller configured to control the DC/DC converter based on the data indicative of the first direct current power output to maintain a slew rate from the fuel cell module within a slew rate range for the fuel cell module.

The power source assembly of any preceding clause, wherein the controller is configured to receive data indicative of the first direct current power output from a location between the fuel cell module and the DC/DC converter.

The power source assembly of any preceding clause, wherein the controller is further configured to receive data indicative of a reference power level, and wherein in controller is configured to control the DC/DC converter based on the data indicative of the reference power level, the data indicative of the first direct current power output, and a slew rate factor for the fuel cell module.

The power source assembly of any preceding clause, wherein the data indicative of the first direct current power output is a current output from the fuel cell module, a voltage output from the fuel cell module, or both.

The power source assembly of any preceding clause, wherein the DC/DC converter is in cascade electrical connection with the fuel cell module.

The power source assembly of any preceding clause, wherein the DC/DC converter is a unidirectional DC/DC converter.

The power source assembly of any preceding clause, wherein the DC/DC converter is a first DC/DC converter, and wherein the power source assembly further comprises: a second DC/DC converter in cascade electrical connection with the battery module.

The power source assembly of any preceding clause, wherein the second DC/DC converter and battery module are in parallel electrical connection with the first DC/DC converter and fuel cell module to provide the net direct current power output to the direct current electric bus.

The power source assembly of any preceding clause, wherein the DC/DC converter is in cascade electrical connection with the battery module.

The power source assembly of any preceding clause, wherein data indicative of the first direct current power output is a current output from the fuel cell module, and wherein the DC/DC converter is configured to control an output current from the battery module to control a current flow from the fuel cell module and maintain the slew rate from the fuel cell module within the slew rate range for the fuel cell module.

The power source assembly of any preceding clause, wherein the DC/DC converter is a first DC/DC converter, and wherein the power source assembly further comprises: a second DC/DC converter in cascade electrical connection with the fuel cell module.

The power source assembly of any preceding clause, wherein the first DC/DC converter and battery module and the fuel cell module are in parallel electrical connection with the second DC/DC converter.

The power source assembly of any preceding clause, wherein the fuel cell module, the battery module, the DC/DC converter, and the direct current electric bus together form a first power assembly, and wherein the power source assembly further comprises a second power assembly comprising: a second fuel cell module; a second battery module; a second direct current electric bus; and a second DC/DC converter in electrical connection with the second direct current electric bus or the second DC/DC converter configured to receive direct current power output from the second fuel cell module or from the second battery module; wherein the load comprises an inverter and a motor configured to receive alternating current electric power from the inverter, wherein the inverter is in electrical connection with the direct current electric bus of the first power assembly and the second direct current electric bus of the second power assembly.

The power source assembly of any preceding clause, wherein the fuel cell module, the battery module, the DC/DC converter, and the direct current electric bus together form a first power assembly, and wherein the power source assembly further comprises a second power assembly comprising a second fuel cell module; a second battery module; a second direct current electric bus; and a second DC/DC converter in electrical connection with the second fuel cell module or the second battery module configured to receive direct current power output from the second fuel cell module or from the second battery module; wherein the load comprises a first inverter in electrical connection with the direct current electric bus of the first power assembly, a second inverter in electrical connection with the second direct current electric bus, and an electric motor configured to receive alternating current electric power from the first inverter, the second inverter, or both.

The power source assembly of any preceding clause, wherein the fuel cell module is a first fuel cell module, wherein the DC/DC converter is a first DC/DC converter, and wherein the power source assembly further comprises a second fuel cell module; a second DC/DC converter in electrical connection with the direct current electric bus and in cascade electrical connection with the second fuel cell module in electrical connection with the second fuel cell module configured to receive direct current power output from the second fuel cell module; wherein the second DC/DC converter and second fuel cell module are in parallel electrical connection with the first DC/DC converter and fuel cell module.

A method of operating a power source assembly for an aeronautical vehicle, the method comprising: providing a first direct current electric power output from a fuel cell module; providing a second direct current electric power output from a battery module; receiving the first direct current electric power output or the second direct current electric power output with a DC/DC converter; receiving data indicative of the first direct current power output; and controlling the DC/DC converter based on the received data indicative of the first direct current power output to maintain a slew rate from the fuel cell module within a slew rate range for the fuel cell module.

The method of any preceding clause, wherein controlling the DC/DC converter based on the received data indicative of the first direct current power output to maintain the slew rate from the fuel cell module within the slew rate range for the fuel cell module comprises: receiving data indicative of a reference power level higher than the first direct current electric power output; and increasing the first direct current electric power output from the fuel cell module to the reference power level at a slew rate within the slew rate range from the fuel cell module.

The method of any preceding clause, wherein the second direct current electric power output is equal to a difference between the reference power level and the first direct current electric power output.

The method of any preceding clause, wherein controlling the DC/DC converter based on the received data indicative of the first direct current power output to maintain the slew rate from the fuel cell module within the slew rate range for the fuel cell module comprises: receiving data indicative of a reference power level lower than the first direct current electric power output; and decreasing the first direct current electric power output from the fuel cell module to the reference power level at a slew rate within the slew rate range from the fuel cell module.

The method of any preceding clause, wherein the second direct current electric power output is a negative power output.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A power source assembly (200, 400, 450, 500) for an aeronautical vehicle (100), the power source assembly (200, 400, 450, 500) comprising:
a fuel cell module (202, 202', 402, 402', 502) configured to provide a first direct current power output;
a battery module (204, 404, 404', 504) configured to provide a second direct current power output;
a direct current electric bus configured to provide a net direct current power output to a load (220, 420, 520);
a DC/DC converter in electrical connection with the direct current electric bus, the DC/DC converter configured to receive the first direct current power output from the fuel cell module (202, 202', 402, 402', 502) or the second direct current power output from the battery module (204, 404, 404', 504); and
a controller (212, 215, 412, 412', 512, 600) operably coupled to the DC/DC converter and configured to receive data indicative of the first direct current power output, the controller (212, 215, 412, 412', 512, 600) configured to control the DC/DC converter based on the data indicative of the first direct current power output to maintain a slew rate from the fuel cell module (202, 202', 402, 402', 502) within a slew rate range for the fuel cell module (202, 202', 402, 402', 502).

2. The power source assembly (200, 400, 450, 500) of claim 1, wherein the controller (212, 215, 412, 412', 512, 600) is configured to receive data indicative of the first direct current power output from a location between the fuel cell module (202, 202', 402, 402', 502) and the DC/DC converter.

3. The power source assembly (200, 400, 450, 500) of claim 2, wherein the controller (212, 215, 412, 412', 512, 600) is further configured to receive data indicative of a reference power level, and wherein in controller (212, 215, 412, 412', 512, 600) is configured to control the DC/DC converter based on the data indicative of the reference power level, the data indicative of the first direct current power output, and a slew rate factor for the fuel cell module (202, 202', 402, 402', 502).

4. The power source assembly (200, 400, 450, 500) of claim 3, wherein the data indicative of the first direct current power output is a current output from the fuel cell module (202, 202', 402, 402', 502), a voltage output from the fuel cell module (202, 202', 402, 402', 502), or both.

5. The power source assembly (200, 400, 450, 500) of claim 2, wherein the DC/DC converter is in cascade electrical connection with the fuel cell module (202, 202', 402, 402', 502).

6. The power source assembly (200, 400, 450, 500) of claim 2, wherein the DC/DC converter is a unidirectional DC/DC converter.

7. The power source assembly (200, 400, 450, 500) of claim 2, wherein the DC/DC converter is a first DC/DC converter, and wherein the power source assembly (200, 400, 450, 500) further comprises:
a second DC/DC converter in cascade electrical connection with the battery module (204, 404, 404', 504).

8. The power source assembly (200, 400, 450, 500) of claim 7, wherein the second DC/DC converter and battery module (204, 404, 404', 504) are in parallel electrical connection with the first DC/DC converter and fuel cell module (202, 202', 402, 402', 502) to provide the net direct current power output to the direct current electric bus.

9. The power source assembly (200, 400, 450, 500) of any preceding claim, wherein the DC/DC converter is in cascade electrical connection with the battery module (204, 404, 404', 504).

10. The power source assembly (200, 400, 450, 500) of claim 9, wherein data indicative of the first direct current power output is a current output from the fuel cell module (202, 202', 402, 402', 502), and wherein the DC/DC converter is configured to control an output current from the battery module (204, 404, 404', 504) to control a current flow from the fuel cell module (202, 202', 402, 402', 502) and maintain the slew rate from the fuel cell module (202, 202', 402, 402', 502) within the slew rate range for the fuel cell module (202, 202', 402, 402', 502).

11. The power source assembly (200, 400, 450, 500) of claim 9, wherein the DC/DC converter is a first DC/DC converter, and wherein the power source assembly (200, 400, 450, 500) further comprises:
a second DC/DC converter in cascade electrical connection with the fuel cell module (202, 202', 402, 402', 502).

12. The power source assembly (200, 400, 450, 500) of claim 11, wherein the first DC/DC converter and battery module (204, 404, 404', 504) and the fuel cell module (202, 202', 402, 402', 502) are in parallel electrical connection with the second DC/DC converter.

13. The power source assembly (200, 400, 450, 500) of any preceding claim, wherein the fuel cell module (202, 202', 402, 402', 502), the battery module (204, 404, 404', 504), the DC/DC converter, and the direct current electric bus together form a first power assembly (450), and wherein the power source assembly (200, 400, 450, 500) further comprises
a second power assembly (452) comprising
a second fuel cell module (202, 202', 402, 402', 502);
a second battery module (204, 404, 404', 504);
a second direct current electric bus; and
a second DC/DC converter in electrical connection with the second direct current electric bus or the second DC/DC converter configured to receive direct current power output from the second fuel cell module (202, 202', 402, 402', 502) or from the second battery module (204, 404, 404', 504);
wherein the load (220, 420, 520) comprises an inverter (142) and a motor configured to receive alternating current electric power from the inverter (142),
wherein the inverter (142) is in electrical connection with the direct current electric bus of the first power assembly (450) and the second direct current electric bus of the second power assembly (452).

14. The power source assembly (200, 400, 450, 500) of any preceding claim, wherein the fuel cell module (202, 202', 402, 402', 502), the battery module (204, 404, 404', 504), the DC/DC converter, and the direct current electric bus together form a first power assembly (450), and wherein the power source assembly (200, 400, 450, 500) further comprises
a second power assembly (452) comprising
a second fuel cell module (202, 202', 402, 402', 502);
a second battery module (204, 404, 404', 504);
a second direct current electric bus; and
a second DC/DC converter in electrical connection with the second fuel cell module (202, 202', 402, 402', 502) or the second battery module (204, 404, 404', 504) configured to receive direct current power output from the second fuel cell module (202, 202', 402, 402', 502) or from the second battery module (204, 404, 404', 504);
wherein the load (220, 420, 520) comprises a first inverter (142) (458) in electrical connection with the direct current electric bus of the first power assembly (450), a second inverter (460)inverter (142) in electrical connection with the second direct current electric bus, and an electric motor (462) configured to receive alternating current electric power from the first inverter (142) (458), the second inverter (460)inverter (142), or both.

15. A method of operating a power source assembly (200, 400, 450, 500) for an aeronautical vehicle (100), the method comprising:
providing a first direct current electric power output from a fuel cell module (202, 202', 402, 402', 502);
providing a second direct current electric power output from a battery module (204, 404, 404', 504);
receiving the first direct current electric power output or the second direct current electric power output with a DC/DC converter;
receiving data indicative of the first direct current power output; and
controlling the DC/DC converter based on the received data indicative of the first direct current power output to maintain a slew rate from the fuel cell module (202, 202', 402, 402', 502) within a slew rate range for the fuel cell module (202, 202', 402, 402', 502).
